# EUROPEAN PATENT APPLICATION

(11) **EP 4 578 672 A1**
(43) Date of publication of application: **02.07.2025**
(21) Application number: 24217491.0
(22) Date of filing: 04.12.2024
(51) Int. Cl.: B60C 23/00, F16C 41/00, F16J 15/3204, B60G 11/27

(54) **TIRE INFLATION DEVICE AND INFLATION SYSTEM**

(30) Priority: 26.12.2023 CN 202311808930
(71) Applicant: Volvo Car Corporation, 405 31 Göteborg (SE)
(72) Inventor: FAN, Hongjun, Shanghai, 201815 (CN); FENG, Xiaogang, Shanghai, 201815 (CN)
(74) Representative: Maiwald GmbH

(57) **Abstract**

The application provides a tire inflation device and a tire inflation system. The tire inflation device is at least partially integrated with a wheel hub bearing (12) comprising a stationary outer ring (16) and a rotatable inner ring (18) and comprises: an engagement port (30) extending through an axial end of the outer ring (16); an adapter (32) engaged to the engagement port (30) to form a first air passage (34); a second air passage (40) disposed in the inner ring (18) and in fluid communication with a tire; and a sealing assembly (42) comprising first and second sealing components (44, 46), the first sealing component (44) comprising a first end (50) abutting against the axial end and the second sealing component (46) comprising a second end (58) abutting against the inner ring (18), wherein the second sealing component (46) is rotatably engaged to the first sealing component (44) to form an annular air passage (48) fluidly communicating the first air passage (34) to the second air passage (40).

## Description

### TECHNICAL FIELD

The present application relates to the field of vehicle technology and more particularly to a tire inflation device and an inflation system.

### BACKGROUND

Nowadays, a vehicle can utilize a system for actively regulating a tire pressure of a vehicle tire while the vehicle is driving. It is a challenge to effectively integrate the system with other systems in the vehicle and enhance the safety and durability of, e.g., a tire inflation device associated with the system.

### SUMMARY

One object of the application is to provide a safe and durable tire inflation device and an inflation system for a vehicle with such a tire inflation device, and the inflation system, comprising a system for actively regulating a tire pressure of a vehicle tire while the vehicle is driving, is effectively integrated with a suspension system in the vehicle.

According to one aspect of the present application, there is provided a tire inflation device, which is at least partially integrated with a wheel hub bearing comprising a stationary outer ring and a rotatable inner ring, comprising: an engagement port extending through an axial end of the outer ring in a radial direction of the wheel hub bearing; an adapter engaged to the engagement port to form a first air passage and configured to be in fluid communication with an air source; a second air passage disposed in the inner ring and in fluid communication with a tire; and a sealing assembly comprising a first sealing component and a second sealing component, the first sealing component comprising a first end abutting against the axial end of the outer ring in the radial direction, and the second sealing component comprising a second end abutting against the inner ring in the radial direction, wherein the second sealing component is rotatably engaged to the first sealing component to form an annular air passage fluidly communicating the first air passage to the second air passage, such that compressed air from the air source can be delivered to the tire via the first air passage, the annular air passage and the second air passage as the inner ring is rotating.

According to another aspect of the present application, there is provided an inflation system for a vehicle comprising a plurality of wheels with wheel hub bearings and tires and a suspension system with a plurality of air springs, the inflation system comprising: an air source configured to provide compressed air for inflating each tire and each air spring; a tire inflation device as described above that is assigned to a corresponding tire and at least partially integrated with a corresponding wheel hub bearing; and a control device configured to control the inflation and deflation of each tire and each air spring, wherein the compressed air from the air source is delivered to the corresponding tire via the tire inflation device.

The tire inflation device provided by the present application is at least partially integrated with the wheel hub bearing, thereby reducing the tire inflation device's footprint, and the sealing assembly is designed to increase the service life of the sealing assembly and thus the service life of the tire inflation device. Furthermore, the inflation system provided by the present application allows the system for actively regulating the tire pressure of the vehicle tire while the vehicle is driving and the suspension system in the vehicle to share a common air source, thereby improving the efficiency of the air source and reducing the number of components of the vehicle.

Further features of the application and advantages thereof are provided in the following detailed description of exemplary embodiments according to the application with reference to the attached drawings.

### BRIEF DESCRIPTION OF THE DRAWINGS

The attached drawings, which are incorporated in and constitute a part of the specification, illustrate the embodiments of the present disclosure and, together with the description thereof, serve to explain the principles of the present disclosure.
FIG. 1 is a schematic view of a wheel and a tire inflation device at least partially integrated with a hub bearing of the wheel in an embodiment of the present application.
FIG. 2 is a partially enlarged view of the tire inflation device of FIG. 1.
FIG. 3 is a schematic view of two sealing assemblies of the tire inflation device of FIG. 2.
FIG. 4 is a partially enlarged view of a tire inflation device in an embodiment of the present application.
FIG. 5 is a schematic view of a floating sealing assembly and an additional sealing assembly of the tire inflation device of FIG. 4.
FIG. 6 is a schematic diagram of an inflation system in an embodiment of the present application.
FIG. 7 is a flow chart of a method for regulating a tire pressure of a vehicle tire while a vehicle is driving by using the inflation system of FIG. 6.

### DETAILED DESCRIPTION

Various exemplary embodiments of the present disclosure will now be described in detail with reference to the drawings. It should be noted that the relative arrangement of the components and steps, the numerical expressions, and numerical values set forth in these embodiments do not limit the scope of the present disclosure unless it is specifically stated otherwise.

Techniques, methods and apparatus as known by one of ordinary skill in the relevant art may not be discussed in detail but are intended to be part of the specification where appropriate.

The following description of one or more exemplary embodiments is merely illustrative in nature and is not intended to limit the present disclosure, its application, or uses. Therefore, other exemplary embodiments may have different values, structures, or features.

It should be noted that the same reference numerals and letters refer to the same items in the subsequent figures, and thus once an item is defined in one figure, it may not be further discussed for the subsequent figures.

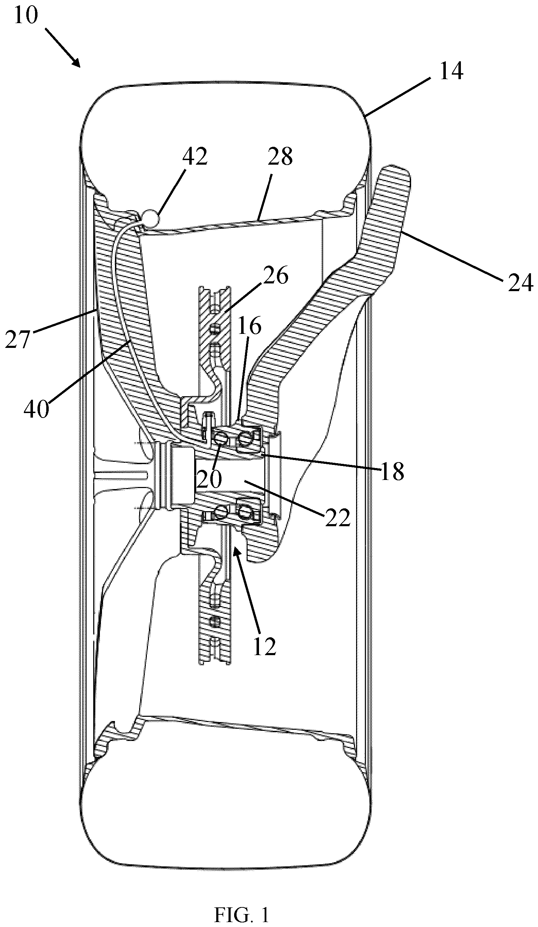

Referring to FIG. 1, an exemplary tire inflation device in an embodiment of the present application is at least partially integrated with a wheel hub bearing 12, that is, the tire inflation device can be applied to a vehicle comprising a plurality of wheels 10, each of the plurality of wheels 10 comprises a wheel hub bearing 12 and a tire 14. Generally, the wheel hub bearing 12 comprises: an outer ring 16 having radial inner and outer surfaces; an inner ring 18 having radial inner and outer surfaces; and a rolling unit disposed in a rolling space formed by the radial inner surface of the outer ring 16 and the radial outer surface of the inner ring 18, For instance, the rolling unit can comprise a cage (not shown) placed in the rolling space and a plurality of rollers 20 supported by the cage. The wheel 10 has an axle extending through a central hole 22 formed by the radial inner surface of the inner ring 18 so as to be fixed to the inner ring 18. When the vehicle is driving, an engine drives the axle to rotate, and then the rotation of the axle causes the inner ring 18 to rotate, and then the rotation of the inner ring 18 causes the plurality of rollers 20 to roll, but the outer ring 16 remains stationary. The rolling space can be filled with lubricant to facilitate the rolling of the plurality of rollers 20. Furthermore, a knuckle 24 is fixed to the radial outer surface of the outer ring 16 and a brake disc 26 is fixed to the radial outer surface of the inner ring 18. Furthermore, a spoke 27 is fixed to the radial outer surface of the inner ring 18 so as to connect a rim 28 to the inner ring 18, and the tire 14 is mounted on the rim 28. In the description, the spoke 27 can be regarded as a part of the inner ring 18, that is, the rim 28 is directly connected to the inner ring 18.

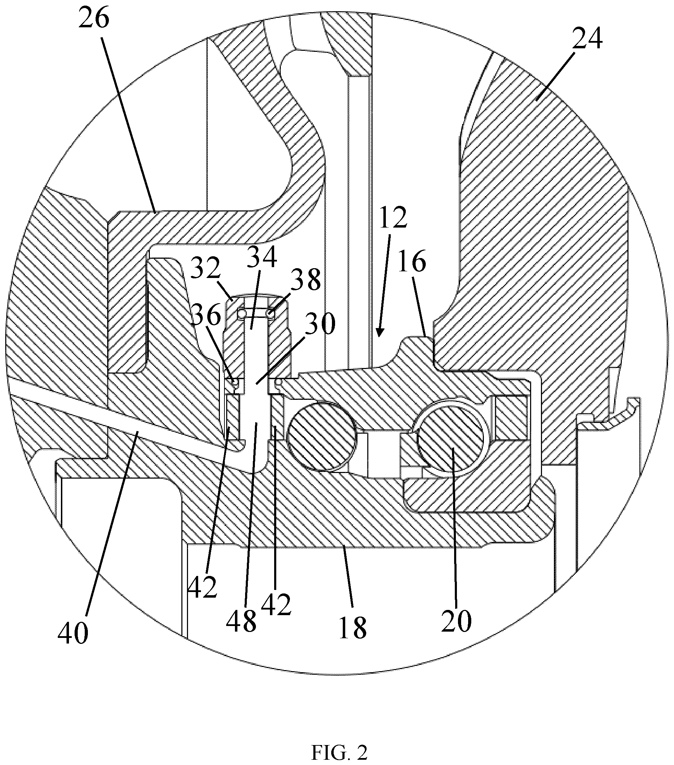

As shown in FIG. 2, the tire inflation device comprises: an engagement port 30 extending through an axial end of the outer ring 16 (e.g., that is close to the brake disc 26) in a radial direction of the wheel hub bearing 12; and an adapter 32 configured to be in fluid communication with an air source and attached to the engagement port 30 in various ways so as to form a first air passage 34. For instance, a through hole can be opened in the radial direction at the axial end of the outer ring 16, and an internal thread can be formed in at least a section of the through hole along a central axis of the through hole such that the through hole can function as the engagement port 30, and an external thread can be provided at one end of the adapter 32 such that the adapter 32 is screwed to the engagement port 30. The adapter 32 has a central passage opened along a central axis of the adapter 32, and when the adapter 32 is screwed to the engagement port 30, the central passage of the adapter 32 is combined with the through hole at the axial end of the outer ring 16, thereby forming the first air passage 34. A first sealing ring 36 can be provided between the engagement port 30 and the one end of the adapter 32. Furthermore, the other end of the adapter 32 is connected to a hose configured to receive compressed air from the air source. A second sealing ring 38 can be provided between the other end of the adapter 32 and the hose, thereby allowing the compressed air from the air source to flow into the first air passage 34 without leakage.

Referring to FIGS. 1 and 2, the tire inflation device further comprises: a second air passage 40 disposed in the inner ring 18. For instance, the second air passage 40 can extend directly through the inner ring 18 (including the spoke 27), and one end of the second air passage 40 is configured to be connected to a valve 42 so as to be in fluid communication with the tire via the valve 42. If the inner ring 18 is made of a material that exhibits an inadequate airtightness, an additional sealing conduit can be provided for the second air passage 40, that is, a passage is made in the inner ring 18 and a part of the passage can be regarded as a part of the second air passage 40, and then the sealing conduit is disposed along the other part of the passage such that the sealing conduit forms the other part of the second air passage 40, thereby enhancing the second air passage 40's airtightness. It should be appreciated that the sealing conduit can be disposed along the entire passage, thereby forming the entire second air passage 40. In addition, the second air passage 40 is prevented from extending through the brake disc 26.

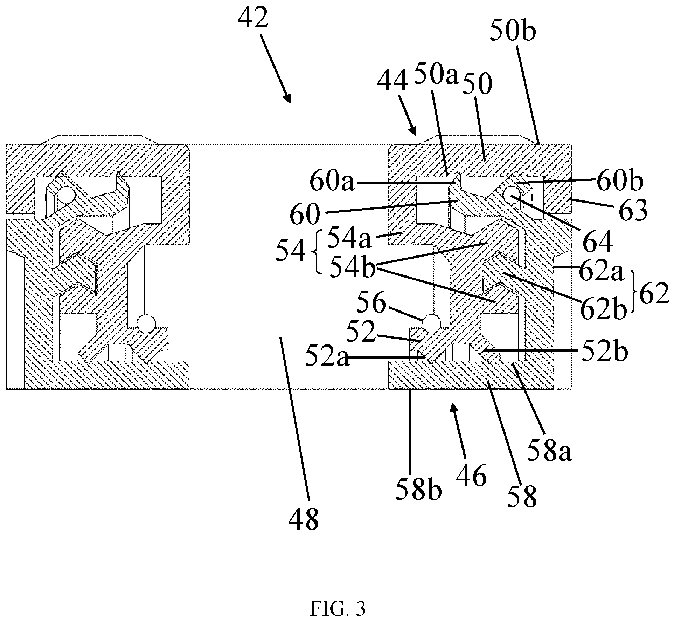

Referring to FIGS. 2 and 3, the tire inflation device further comprises a sealing assembly 42 comprising a first sealing component 44 and a second sealing component 46. The second sealing component 46 is rotatably engaged to the first sealing component 44 to form an annular air passage 48 with a radial/axial direction coinciding with/parallel to a radial/axial direction of the hub bearing 12, and the annular air passage 48 fluidly communicates the first air passage 34 to the second air passage 40 such that the compressed air from the air source can be delivered to the tire via the first air passage 34, the annular air passage 48 and the second air passage 40 as the inner ring 18 is rotating.

Continuing to refer to FIG. 3, the first sealing component 44 comprises: a first end 50 with a first end face 50a and a second end face 50b disposed oppositely to each other in the radial direction; a first lip 52 disposed oppositely to the first end 50 in the radial direction; a first labyrinth structure 54 that connects the first lip 52 to the first end 50 and is elastically deformable; and a first spring 56. Similarly, the second sealing component 46 comprises: a second end 58 with a third end face 58a and a fourth end face 58b disposed oppositely to each other in the radial direction; a second lip 60 disposed oppositely to the second end 58 in the radial direction; a second labyrinth structure 62 that connects the second lip 60 to the second end 58 and is elastically deformable; and a second spring 64. The first spring 56 abuts against and acts on the first lip 52 such that the first lip 52 abuts against the third end face 58a of the second end 58 and the fourth end face 58b abuts against the radial outer surface of the inner ring 18. The second spring 64 abuts against and acts on the second lip 60 such that the second lip 60 abuts against the first end surface 50a of the first end 50 and the second end surface 50b abuts against the radial inner surface of the outer ring 16 at the axial end of the outer ring 16.

For instance, the first lip 52 comprises a first contact portion 52a and a second contact portion 52b, which abut against a first position and a second position of the third end face 58a respectively, the first position being closer to the annular air passage 48 and further away from the second labyrinth structure 62 than the second position. The first contact portion 52a and the second contact portion 52b each have first and second sharp corners/arc parts abutting against the third end face 58a. Similarly, the second lip 60 comprises a third contact portion 60a and a fourth contact portion 60b, which abut against a third position and a fourth position of the first end face 50a respectively, the third position being closer to the annular air passage 48 and closer to the first labyrinth structure 54 than the fourth position. The third contact portion 60a and the fourth contact portion 60b each have third and fourth sharp corners/arc parts abutting against the first end face 50a. The first to fourth sharp corners/arc parts are designed to significantly reduce a contact area between the first lip 52 and the third end face 58a as well as a contact area between the second lip 60 and the first end face 50a, so as to avoid hindering a rotation of the second sealing component 46 relative to the first sealing component 44, thereby reducing heat generated by friction, minimizing possible wear, improving the service life and efficiency of the sealing assembly 42, and ensuring the sealing assembly 42's performance.

The first spring 56 and the second spring 64 can be two separate springs or two parts of the same spring. The first contact portion 52a has a first recess facing away from the third end face 58a for receiving the first spring 56, such that the first spring 56 acts directly on the first contact portion 52a and indirectly on the second contact portion 52b in the radial direction, thereby ensuring that the first and second sharp corners/arc parts abut against the third end face 58a stably. Similarly, the fourth contact portion 60b has a second recess facing away from the first end face 50a for receiving the second spring 64, such that the second spring 64 acts directly on the fourth contact portion 60b and indirectly on the third contact portion 60a in the radial direction, thereby ensuring that the third and fourth sharp corners/arc parts abut against the first end face 50a stably.

The first labyrinth structure 54 has a first main body 54a extending generally in the radial direction and at least one first protrusion (e.g., two first protrusions 54b) protruding from the first main body 54a, and the at least one first protrusion can be bent. The second labyrinth structure 62 has a second main body 62a extending generally in the radial direction and at least one second protrusion 62b (e.g., one second protrusion) protruding from the second main body 62a, and the at least one second protrusion 62b can be bent. The first main body 54a is connected to the first end 50, and the first end 50 has a shielding portion 63 extending in the radial direction. The first end 50, the first main body 54a, and one of the two first protrusions 54b that is close to the first end 50 form a first space 65 for receiving the second lip 60 and an entrance to the first space 65, and the shielding portion 63 helps to block the lubricant from the rolling space from entering the first space 65. The second main body 62a is connected to the second end 58, but the second end 58 does not have a shielding portion 63, such that a second space for receiving the first lip 52 is completely open, especially completely open toward the annular air passage 48. For instance, when the compressed air from the air source does not pass through the annular air passage 48, the first labyrinth structure 54 and the second labyrinth structure 62 are engaged (e.g. overlapped in the radial direction) but not in contact with each other, e.g., the two first protrusions 54b and the one second protrusion 62b are alternately disposed in the radial direction to form a first serpentine gap between the first sealing component 44 and the first sealing component 44, that is, the first serpentine gap is formed by the first and second labyrinth structures 54, 62 and the first and second ends 50, 58. The first serpentine gap comprises a part extending in the radial direction and a part extending at an angle to the radial direction, and the first serpentine gap is closed by the first to fourth sharp corners/arc parts at the first to fourth positions, thereby ensuring the sealing assembly 42's airtightness under different conditions.

When the compressed air from the air source passes through the annular air passage 48 and applies a force to the first and second sharp corners/arc parts, such a force can cause the first and second sharp corners/arc parts to be at least partially separated from the third end face 58a, thus, the compressed air can enter the first serpentine gap and applies a force to the other one of the two first protrusions 54b that is close to the third end face 58a, such that the other one of the two first protrusions 54b is elastically deformed to contact the second protrusion 62b, thereby preventing the compressed air from flowing into the first space 65 via the first serpentine gap and thus improving the sealing assembly 42's airtightness.

In the embodiment of FIG. 3, the annular air passage 48 are formed by two sealing assemblies 42, one of which has the first sealing component 44 abutting against a portion of the axial end of the outer ring 16 that is axially adjacent to the rolling space, thereby at least partially sealing the rolling space and isolating the annular air passage 48 from the rolling space, and the other of which has the first sealing component 44 abutting against a portion of the axial end of the outer ring 16 that is axially away from the rolling space, thereby isolating the annular air passage 48 from an external environment. For instance, the annular air passage 48 has a minimum width in the axial direction that is determined by the first ends 50 or the second ends 58 of the first sealing components 44 of the two sealing assemblies 42 and that is substantially equal to the diameter of the first air passage 34 and substantially equal to the diameter of the other end of the second air passage 40 that is in fluid communication with the annular air passage 48. Meanwhile, the annular air passage 48 has a greater width in the axial direction that is determined by the first main bodies 54a of the first sealing components 44 of the two sealing assemblies 42 since one part of each of the first main bodies 54a extends substantially in the radial direction while the other part of each of the first main bodies 54a can be bent toward the second main body 62a. Furthermore, the other end of the second air passage 40 can extend radially inward in the inner ring 18 first and then can be bent such that the one end of the second air passage 40 can be in fluid communication with the tire via the valve 42.

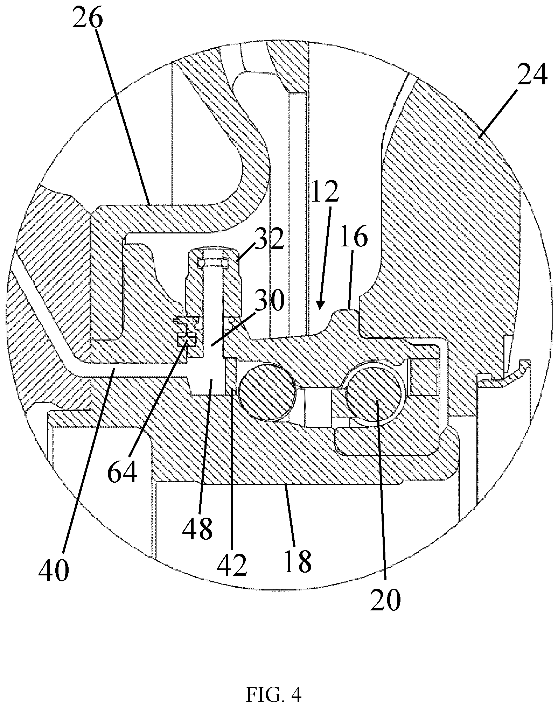

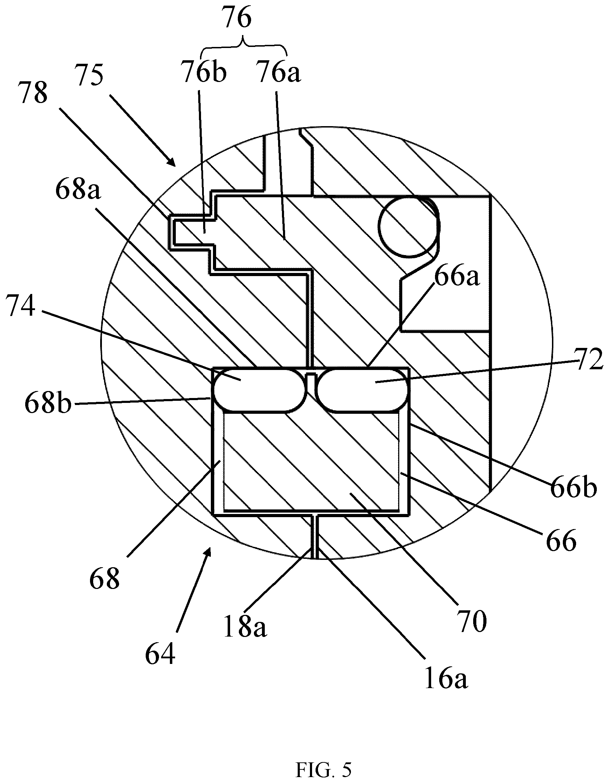

In the embodiment of FIGS. 4 and 5, the sealing assembly 42 is a single sealing assembly abutting against the portion of the axial end of the outer ring 16 axially adjacent to the rolling space, thereby at least partially sealing the rolling space and isolating the annular air passage 48 from the rolling space, and the annular air passage 48 is formed by the single sealing assembly and the inner ring 18. Meanwhile, as particularly clearly shown in FIG. 5, the tire inflation device further comprises a floating sealing assembly 67 disposed between a first axial end face 16a of the axial end of the outer ring 16 and a second axial end face 18a of the inner ring 18 that is axially opposed to the first axial end face 16a, thereby isolating the annular air passage 48 from the external environment. For instance, as shown in FIG. 4, the second axial end face 18a is an axial end face of a flange of the inner ring 18 and the flange of the inner ring 18 is configured to connect a flange of the brake disc 26. Continuing to refer to FIG. 5, the floating sealing assembly 67 comprises: a first annular groove 66 formed on the first axial end face 16a; a second annular groove 68 formed on the second axial end face 18a so as to be axially opposed to the first annular groove 66; and a floating sealing component disposed in a space defined by the first annular groove 66 and the second annular groove 68. As clearly shown in FIG. 5, the floating sealing component comprises an annular bracket 70 and a first sealing ring 72 and a second sealing ring 74 supported by the annular bracket 70. The first sealing ring 72 is elastically deformable and abuts against a first radially outer wall 66a of the first axial end face 16a that forms the first annular groove 66 and a first groove bottom wall 66b of the first axial end face 16a that forms the first annular groove 66 and extends perpendicularly to the first radially outer wall 66a. The second sealing ring 74 is elastically deformable and abuts against a second radially outer wall 68a of the second axial end face 18a that forms the second annular groove 68 and a second groove bottom wall 68b of the second axial end face 18a that forms the second annular groove 68 and extends perpendicularly to the second radially outer wall 68a, thereby isolating the external environment from the annular air passage 48. The first sealing ring 72, the second sealing ring 74 and the annular bracket 70 can rotate to a certain extent relative to the outer ring 16 as the inner ring 18 is rotating. Due to the existence of the floating sealing assembly 67, the other end of the second air passage 40 can directly extend axially in the inner ring 18 instead of extending radially inward in the inner ring 18 first, thereby facilitating the machining of the inner ring 18.

Optionally, the tire inflation device further comprises an additional sealing assembly 75. The additional sealing assembly 75 comprises: a labyrinth projection 76 formed on the first axial end surface 16a radially outward relative to the first annular groove 66 and comprising a first ring portion 76a connected to the first axial end surface 16a and a second ring portion 76b connected to the first ring portion 76a, the first ring portion 76a has an outer diameter larger than that of the second ring portion 76b and an inner diameter smaller than that of the second ring portion 76b such that the first ring portion 76a has a thickness in the radial direction that is larger than that of the second ring portion 76b; and a third annular groove 78 formed on the second axial end face 18a of the inner ring 18. The third annular groove 78 is shaped to be substantially complementary to the shape of labyrinth projection 76, so as to allow the labyrinth projection 76 to axially project into the third annular groove 78, thereby forming a second serpentine gap between the first axial end face 16a and the second axial end face 18a by the inner diameter and outer diameter of the first ring portion 76a and the second ring portion 76b, thereby facilitating isolating the annular air passage 48 to the external environment and preventing substances from the external environment from entering, scratching and damaging the first sealing ring 72 and the second sealing ring 74.

The sealing components referred to herein can be fabricated from various materials, such as rubber, silicone, polytetrafluoroethylene (PTFE) or metal, in order to possess wear resistance, elasticity and chemical stability that are compatible with a usage condition.

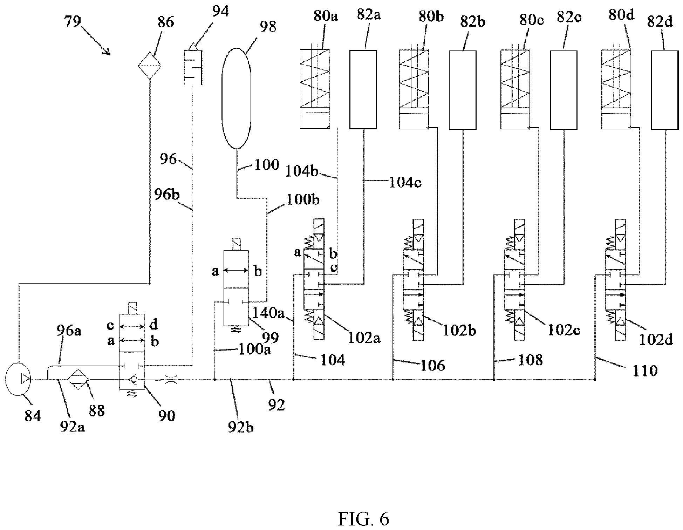

FIG. 6 shows an exemplary inflation system 79 for a vehicle comprising a suspension system with a plurality of air springs 80a, 80b, 80c, 80d and a plurality of wheels with hub bearings and tires 82a, 82b, 82c, 82d, and a tire inflation device in the embodiments of the present application can be at least partially integrated with a corresponding hub bearing so as to be used for a corresponding tire. The inflation system 79 can comprise a central tire inflation system, i.e., a system for actively regulating a tire pressure of a vehicle tire while a vehicle is driving.

The inflation system 79 comprises: a human-machine interface (HMI) disposed on a dashboard or at another suitable locations in the vehicle, e.g., the HMI may comprise a touch screen with a display function, etc., and a user may input a user instruction via the HMI, e.g., to indicate a tire pressure request; an air pump 84 configured to be operated to draw air from the external environment and produce compressed air, optionally, a filter 14 located upstream of the air pump 12 can filter the air from the external environment and/or a dryer 16 located downstream of the air pump 12 can dry the compressed air; a first valve 90; a main line 92 in fluid communication with the air pump 84 via the first valve 90 and used to deliver the compressed air from the air pump 84; an exhaust device 94 with a silencer; and a first branch 96 fluidly communicating the exhaust device 94 to the main line 92 via the first valve 90.

Hereinafter, "close" and "away" are defined based on a flow direction of the compressed air.

For instance, the first valve 90 is configured as a two-position four-way solenoid valve with a first port a fluidly connected to a first interface of a first section 92a of the main line 92 that is close to/in fluid communication with the air pump 84, a second port b fluidly connected to a second interface of a second section 92b of the main line 92 that is away from the air pump 84, a third port c fluidly connected to a first interface of a first section 96a of the first branch 96 that is close to the air pump 84, and a fourth port d fluidly connected to a second interface of a second section 96b of the first branch 96 that is away from the air pump 84. The first valve 90 can be switched to a first position (as shown in FIG. 1), e.g., by a movement of a valve core of the first valve 90, in which the first port a and the second port b of the first valve 90 are opened such that the first port a is in preferably unidirectional fluid communication with the second port b (i.e., the compressed air cannot flow back from the second port b to the first port a) and the third port c and the fourth port d are closed. The first valve 90 can be switched to a second position, in which the first port a and the second port b of the first valve 90 are opened such that the first port a is in fluid communication with the second port b and the third port c and the fourth port d are opened such that the third port c is in fluid communication with the fourth port d.

The inflation system 79 further comprises: an air storage tank 98 configured to store a certain amount of compressed air; a second valve 99; and a second branch 100 fluidly communicating the air storage tank 98 with the main line 92 via the second valve 99.

For instance, the second valve 99 is configured as a two-position two-way solenoid valve with a first port a fluidly connected to a first interface of a first section 100a of the second branch 100 that is close to/in fluid communication with the main line 92 and a second port b fluidly connected to a second interface of a second section 100b of the second branch 100 that is away from the main line 92. The second valve 99 can be switched to a first position, e.g., by a movement of a valve core of the second valve 99, in which the first port a and the second port b of the second valve 99 are opened such that the first port a of the second valve 99 is in fluid communication with the second port b. The second valve 99 can be switched to a second position (as shown in FIG. 1), in which the first port a and the second port b of the second valve 99 are closed.

The inflation system 79 further comprises: multiple third valves 102a, 102b, 102c, 102d; and multiple third branches 104, 106, 108, 110, each third branch fluidly communicating a corresponding air spring or the corresponding tire with the main line 92 via a corresponding third valve.

For instance, each third valve (e.g., the third valve 102a) is configured as a three-position three-way solenoid valve with a first port a fluidly connected to a first interface of a first section 104a of a corresponding third branch (e.g., the third branch 104) that is close to/in fluid communication with the main line 92, a second port b fluidly connected to a second interface of a second section 104b of the corresponding third branch that is in fluid communication with the corresponding air spring (e.g., the air spring 80a), and a third port c fluidly connected to a third interface of a third section 104c of the corresponding third branch that is in fluid communication with the corresponding tire (e.g., the tire 82a). The third valve 102a can be switched to a first position, e.g., by a movement of a valve core of the third valve 102a, in which the first port a and the second port b are opened such that the first port a is in fluid communication with the second port b and the third port c is closed. The third valve 102a can be switched to a second position (as shown in FIG. 1), in which the first port a, the second port b, and the third port c are closed. The third valve 102a can be switched to a third position, in which the first port a and the third port c are opened such that the first port a is in fluid communication with the third port c, and the second port b is closed.

As the system for actively regulating the tire pressure of the vehicle tire while the vehicle is driving is incorporated in the inflation system 79, the inflation system 79 further comprises: a direct tire pressure monitoring system (DTPMS) comprising a plurality of tire sensors, each of which can be installed inside the corresponding tire, on a valve leading to the inside of the corresponding tire, and/or on a rim on which the corresponding tire is installed, so as to monitor the tire pressure P1 of the corresponding tire, e.g., the DTPMS sends a detected tire pressure P1 to a remote control receiving module (e.g., Telematic and Connectivity Attendance Module, TCAM) via a wireless transmission signal; a plurality of air spring force sensors, each of which is configured to detect an air pressure P2 inside the corresponding air spring; and a control device comprising a processor and a memory coupled to the processor, the memory storing executable instructions, wherein the processor is configured to execute the executable instructions to carry out steps to be described in detail below.

The control device can be integrated into a suspension electronic control unit (e.g., Suspension Module, SUM) or another suitable control unit of the vehicle. The control device can acquire information related to the tire pressure P1 from the TCAM via a wired transmission signal. Meanwhile, the control device can acquire information related to the air pressure P2 from the plurality of air spring force sensors directly or via a CAN (Controller Area Network) bus. The control device analyzes the information for controlling the inflation and deflation of each air spring and each tire, that is, controlling the air pump 84 to be shut down and activated and the first valve 90, the second valve 99 and the multiple third valves 102a, 102b, 102c, 102d to be located at/switched to different positions.

The compressed air from the air pump 84 is delivered to the air storage tank 98 via the main line 92 and the second branch 100 when the air pump 84 is activated, the first valve 90 is in the first position, the second valve 99 is in the first position, and the multiple third valves 102a, 102b, 102c, 102d are in the second position.

The compressed air from the air pump 84 is delivered to the corresponding air spring via the main line 92 and the first and second sections of the corresponding third branch when the air pump 84 is activated, the first valve 90 is in the first position, the second valve 99 is in the second position, and at least one of the multiple third valves 102a, 102b, 102c, 102d is in the first position.

The compressed air from the air pump 84 is delivered to the corresponding tire via the main line 92 and the first and third sections of the corresponding third branch when the air pump 84 is activated, the first valve 90 is in the first position, the second valve 99 is in the second position, and at least one of the multiple third valves 102a, 102b, 102c, 102d is in the third position,.

The compressed air from the air storage tank 98 is delivered to the corresponding air spring via the second branch 100, the main line 92, and the first and second sections of the corresponding third branch when the air pump 84 is shut down, the first valve 90 is in the first position, the second valve 99 is in the first position, and at least one of the multiple third valves 102a, 102b, 102c, 102d is in the first position.

The compressed air from the air storage tank 98 is delivered to the corresponding tire via the second branch 100, the main line 92, and the first and third sections of the corresponding third branch when the air pump 84 is shut down, the first valve 90 is in the first position, the second valve 99 is in the first position, and at least one of the multiple third valves 102a, 102b, 102c, 102d is in the third position,.

The compressed air from the corresponding air spring is discharged via the second and first sections of the corresponding third branch, the main line 92, the first branch 96 and the exhaust device 94 when the air pump 84 is shut down, the first valve 90 is in the second position, the second valve 99 is in the second position and at least one of the multiple third valves 102a, 102b, 102c, 102d is in the first position,.

The compressed air from the corresponding tire is discharged via the g first and third sections of the corresponding third branch, the main line 92, the first branch 96 and the exhaust device 94 when the air pump 84 is shut down, the first valve 90 is in the second position, the second valve 99 is in the second position and at least one of the multiple third valves 102a, 102b, 102c, 102d is in the third position,.

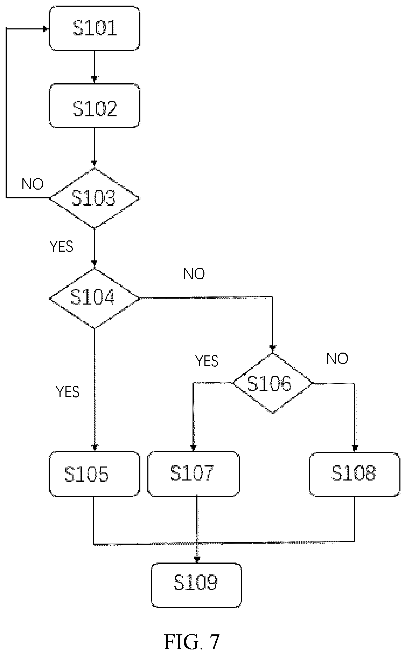

FIG. 7 shows a flow chart of a method for independently regulating the tire pressure of each of the tires 82a, 82b, 82c, 82d by using the inflation system 79. It should be appreciated that the air pressure of each of the air springs 80a, 80b, 80c, 80d can be independently regulated by using the inflation system 79 based on at least some of the steps in the method. The air source, which previously is only used in the suspension system, is shared by each of the tires 82a, 82b, 82c, 82d and each of the air springs 80a, 80b, 80c, 80d.

The method comprises steps 101-109.

A value of a vehicle speed V is acquired and a value of a reference tire pressure S is determined based at least on the acquired value of the vehicle speed V in step 101.

A value of a tire pressure P1 is acquired and a difference between the acquired value of the tire pressure P1 and the determined value of reference tire pressure S is determined in step 102. Optionally, the difference has an absolute value greater than a difference threshold.

It is evaluated in step 103 whether the acquired value of the vehicle speed V is greater than a vehicle speed threshold (e.g., 10 km/h), whether the vehicle is not steering by using a signal from a steering sensor, and/or whether each of doors, a hood, and a trunk lid of the vehicle are securely closed by using signals from relevant sensors located at each of the doors, the hood, and the trunk lid.

If the evaluated result in step S103 indicates that the acquired value of the vehicle speed V is less than or equal to the vehicle speed threshold, or the vehicle is turning, or at least one of the doors, the hood or the trunk lid is not securely closed (i.e., no), then it is inappropriate to regulate the tire pressure P1 and the method can be returned to step 101. Optionally, a user can be reminded of the reason why it is inappropriate to regulate the tire pressure P1 by means of, e.g., the touch screen, another display or a sound signal.

If the evaluated result in step S103 indicates that the acquired value of the vehicle speed V is greater than the vehicle speed threshold, the vehicle is not turning, and all the doors, the hood and the trunk lid are securely closed (i.e., yes), then the method is moved forward to step 104, in which it is evaluated whether the difference is positive.

If the difference is evaluated as being positive in step S104, then the method is moved forward to step 105, in which a deflation is performed to the corresponding tire detected to have the acquired value of the tire pressure P1. For instance, the control device can control the air pump 84 to be shut down, the first valve 20 to be located at/switched to the second position, the second valve 30 to be located at/switched to the second position, and the corresponding third valve to be located at/switched to the first position, such that the compressed air in the corresponding tire can be discharged via the first and third sections of the corresponding third branch, the main line 92, the first branch 96, and the exhaust device 94.

If the difference is evaluated as not being positive, i.e., as being negative in step 104, then the method is moved forward to inflate the corresponding tire.

For instance, it is evaluated whether the compressed air in the air storage tank 98 is enough to inflate the corresponding tire based on the absolute value of the difference in step S 106.

If it is evaluated the compressed air in the air storage tank 98 is enough in step S106, then the compressed air in the air storage tank 98 is used to inflate the corresponding tire in step S107. For instance, the control device controls the air pump 84 to be shut down d, the first valve 20 to be located at/switched to the first position, the second valve 30 to be located at/switched to the first position, and the third valve to be located at/switched to the third position, such that the compressed air in the air storage tank 98 is delivered to the corresponding tire via the second branch 100, the main line 92, and the first and third sections of the corresponding third branch.

If it is evaluated the compressed air in the air storage tank 98 is not enough in step S106, the compressed air from the air pump 84 is used to inflate the corresponding tire in step S108. For instance, the control device controls the air pump 84 to be activated, the first valve 20 to be located at/switched to the first position, the second valve 30 to be located at/switched to the second position, and the third valve to be located at/switched to the third position, such that the compressed air from the air pump 84 is delivered to the corresponding tire via the main line 92, the first and third sections of the corresponding third branch.

A value of the tire pressure P1 is reacquired at a time interval such as T1 in step 109, and the method is ended when the reacquired value of the tire pressure P1 is equal to or close to the determined value of the reference tire pressure S, i.e., a difference between the reacquired value of the tire pressure P and determined value of the reference tire pressure S has an absolute value that is less than the difference threshold.

The control device, in particular the processor of the control device, has been described in connection with various devices and methods. The processor can be implemented as an electronic hardware, a computer software, or any combination thereof, depending on a specific application and an overall design constraint. For instance, the processor, any part of the processor, or any combination of processors given in this application can be implemented as a microprocessor, a microcontroller, a digital signal processor (DSP), a field programmable gate array (FPGA), a programmable logic device (PLD), a state machine, a gate logic, a discrete hardware circuit, and other suitable processing components configured to perform various functions described in this application. Furthermore, the processor, any part of the processor, or any combination of processors given in this application can be implemented as a software executed by the microprocessor, the microcontroller, the DSP or the other suitable processing components.

The flow chart and diagrams in the attached drawings show possible architectures, functions and operations enabled by the method, device and machine-readable storage medium in the embodiments of the application. In this regard, each of boxes in the flowchart or diagrams can represent a part of a module, a program segment or an instruction containing one or more of the executable instructions. In some alternative embodiments, functions represented by the boxes can occur in a different order from an order marked in the attached drawings. For instance, two consecutive boxes can actually be executed substantially in parallel and can sometimes be executed in an opposite order, depending on a specific function or action to be realized. It should be noted that each and combinations of the boxes in the flow chart and diagrams can be implemented with a dedicated hardware-based unit that performs a specific function or action, or can be implemented with a combination of dedicated hardware and computer instructions. It is known to those skilled in the art that it is equivalent to implement it by a hardware, a software, and any combination thereof.

Although some specific embodiments of the present disclosure have been demonstrated in detail with examples, it should be understood by those skilled in the art that the above examples are only intended to be illustrative but not to limit the scope of the present disclosure and the above embodiments could be modified without departing from the scope of the present disclosure.

### Clauses

Clause 1. A tire inflation device, which is at least partially integrated with a wheel hub bearing 12 comprising a stationary outer ring 16 and a rotatable inner ring 18, comprising: an engagement port 30 extending through an axial end of the outer ring 16 in a radial direction of the wheel hub bearing 12; an adapter 32 engaged to the engagement port 30 to form a first air passage 34 and configured to be in fluid communication with an air source; a second air passage 40 disposed in the inner ring 18 and in fluid communication with a tire; and a sealing assembly 42 comprising a first sealing component 44 and a second sealing component 46, the first sealing component 44 comprising a first end 50 abutting against the axial end of the outer ring 16 in the radial direction, and the second sealing component 46 comprising a second end 58 abutting against the inner ring 18 in the radial direction, wherein the second sealing component 46 is rotatably engaged to the first sealing component 44 to form an annular air passage 48 fluidly communicating the first air passage 34 to the second air passage 40, such that compressed air from the air source can be delivered to the tire via the first air passage 34, the annular air passage 48 and the second air passage 40 as the inner ring 18 is rotating.

Clause 2. The tire inflation device of clause 1, wherein the first sealing component 44 further comprises a first lip 52 disposed opposed to the first end 50 in the radial direction and a first spring 56 abutting against the first lip 52 such that the first lip 52 that is opposite to the inner ring 18 with respect to the second end 58 abuts against a portion of the second end 58, and the second sealing component 46 comprises a second lip 60 disposed opposite to the second end 58 in the radial direction and a second spring 64 abutting against the second lip 60 such that the second lip 60 that is opposite to the axial end of the outer ring 16 with respect to the first end 50 abuts against a portion of the first end 50.

Clause 3. The tire inflation device of clause 2, wherein the first sealing component 44 comprises a first labyrinth structure 54 connecting the first lip 52 to the first end 50, and the second sealing component 46 comprises a second labyrinth structure 62 connecting the second lip 60 to the second end 58, the first labyrinth structure 54 and the second labyrinth structure 62 being engaged but not in contact with each other so as to form a first serpentine gap between the first sealing component 44 and the first sealing component 44 when the compressed air from the air source does not pass through the annular air passage 48, and the first labyrinth structure 54 being elastically deformed to at least partially contact with the second labyrinth structure 62 when the compressed air from the air source that passes through the annular air passage 48 enters the first serpentine gap, thereby applying a force to the first labyrinth structure 54.

Clause 4. The tire inflation device of any of clauses 1 to 3, wherein the wheel hub bearing 12 comprises a rolling unit disposed in a space between the outer ring 16 and the inner ring 18, and the annular air passage 48 is formed by two sealing assemblies 42, one of which is configured to isolate the annular air passage 48 from the space, and the other of which is configured to isolate the annular air passage 48 from an external environment.

Clause 5. The tire inflation device of any of clauses 1 to 3, wherein the wheel hub bearing 12 comprises a rolling unit disposed in a space between the outer ring 16 and the inner ring 18, the sealing assembly 42 is configured to isolate the annular air passage 48 from the space, and the tire inflation device further comprises a floating sealing assembly 67 disposed between a first axial end face 16a of the axial end of the outer ring 16 and a second axial end face 18a of the inner ring 18 axially opposed to the first axial end face 16a and configured to isolate the annular air passage 48 from an external environment, and the floating sealing assembly 67 comprises: a first annular groove 66 formed on the first axial end surface 16a; a second annular groove 68 formed on the second axial end surface 18a to be axially opposed to the first annular groove 66; an annular bracket 70; and a first sealing ring 72 and a second sealing ring 74 supported by the annular bracket 70, the first sealing ring 72 abutting against a wall of the first axial end face 16a forming the first annular groove 66, and the second sealing ring 74 abutting against a wall of the second axial end face 18a forming the second annular groove 68.

Clause 6. The tire inflation device of clause 5, comprising an additional sealing assembly 75 comprising: a labyrinth projection 76 formed on the first axial end surface 16a radially outwardly relative to the first annular groove 66; and a third annular groove 78 formed on the second axial end surface 18a, the labyrinth projection 76 projecting axially into the third annular groove 78 to form a second serpentine gap between the first axial end surface 16a and the second axial end surface 18a.

Clause 7. An inflation system 79 for a vehicle comprising a plurality of wheels with wheel hub bearings and tires 82a, 82b, 82c, 82d and a suspension system with a plurality of air springs 80a, 80b, 80c, 80d, the inflation system 79 comprising: an air source configured to provide compressed air for inflating each tire and each air spring; a tire inflation device of any of clauses 1 to 6 assigned to a corresponding tire and at least partially integrated with a corresponding wheel hub bearing; and a control device configured to control the inflation and deflation of each tire and each air spring, wherein the compressed air from the air source is delivered to the corresponding tire via the tire inflation device.

Clause 8. The inflation system 79 of clause 7, wherein the air source comprises an air pump 84 and an air storage tank 98, and the inflation system 79 further comprises: a first valve 90 and a main line 92 in fluid communication with the air pump 84 via the first valve 90; an exhaust device 94 with a silencer; a first branch 96 fluidly communicating the exhaust device 94 to the main line 92 via the first valve 90; a second valve 99 and a second branch 100 fluidly communicating the air storage tank 98 to the main line 92 via the second valve 99; and multiple third valves 102a, 102b, 102c, 102d and multiple third branches 104, 106, 108, 110 each fluidly communicating a corresponding air spring or the corresponding tire to the main line 92 via a corresponding third valve.

Clause 9. The inflation system 79 of clause 8, wherein at least one of: the first valve 90 is a two-position four-way solenoid valve with a first port fluidly connected to a first interface of the main line 92, a second port fluidly connected to a second interface of the main line 92, a third port fluidly connected to a first interface of the first branch 96, and a fourth port fluidly connected to a second interface of the first branch 96, the first and second ports of the first valve 90 are opened such that the first port of the first valve 90 is in unidirectional fluid communication with the second port of the first valve 90 and the third and fourth ports of the first valve 90 are closed when the first valve 90 is in a first position, and the first and second ports of the first valve 90 are opened to be in fluid communication with each other and the third and fourth ports of the first valve 90 are opened to be in fluid communication with each other when the first valve 90 is in a second position; the second valve 99 is a two-position two-way solenoid valve with a first port fluidly connected to a first interface of the second branch 100 and a second port fluidly connected to a second interface of the second branch 100, the first and second ports of the second valve 99 are opened to be in fluid communication with each other when the second valve 99 is in a first position, and the first and second ports of the second valve 99 are closed when the second valve 99 is in a second position; and each third branch comprises a first section in fluid communication with the main line 92, a second section in fluid communication with the corresponding air spring, and a third section in fluid communication with the corresponding tire, and each third valve is a three-position three-way solenoid valve with a first port fluidly connected to a first interface of the first section, a second port fluidly connected to a second interface of the second section, and a third port fluidly connected to a third interface of the third section, the first and second ports of each third valve are opened to be in fluid communication with each other and the third port of the third valve is closed when each third valve is in a first position, the first, second and third ports of each third valve are closed when each third valve is in a second position, and the first and third ports of each third valve are opened to be fluid communication with each other and the second port is closed when each third valve is in a third position.

Clause 10. The inflation system 79 of clause 9, wherein the control device is configured to at least one of: control the air pump 84 to be activated, the first valve 90 to be located in the first position, the second valve 99 to be located in the first position, and the multiple third valves 102a, 102b, 102c, 102d to be located in the second position; control the air pump 84 to be activated, the first valve 90 to be located in the first position, the second valve 99 to be located in the second position, and at least one of the multiple third valves 102a, 102b, 102c, 102d to be located in the first or third position; control the air pump 84 to be shut down, the first valve 90 to be located in the first position, the second valve 99 to be located in the first position, and at least one of the multiple third valves 102a, 102b, 102c, 102d to be located in the first or third position; and control the air pump 84 to be shut down, the first valve 90 to be located in the second position, the second valve 99 to be located in the second position, and at least one of the multiple third valves 102a, 102b, 102c, 102d to be located in the first or third position.

Clause 11. The inflation system 79 of any of clauses 7-10, wherein the control device is configured to determine that the vehicle has a vehicle speed greater than a vehicle speed threshold, the vehicle is not turning, and each of doors, a hood and a main body lid of the vehicle are securely closed before controlling the inflation and deflation of each tire.

## Claims

1. A tire inflation device, which is at least partially integrated with a wheel hub bearing (12) comprising a stationary outer ring (16) and a rotatable inner ring (18), comprising:
an engagement port (30) extending through an axial end of the outer ring (16) in a radial direction of the wheel hub bearing (12);
an adapter (32) engaged to the engagement port (30) to form a first air passage (34) and configured to be in fluid communication with an air source;
a second air passage (40) disposed in the inner ring (18) and in fluid communication with a tire; and
a sealing assembly (42) comprising a first sealing component (44) and a second sealing component (46), the first sealing component (44) comprising a first end (50) abutting against the axial end of the outer ring (16) in the radial direction, and the second sealing component (46) comprising a second end (58) abutting against the inner ring (18) in the radial direction,
wherein the second sealing component (46) is rotatably engaged to the first sealing component (44) to form an annular air passage (48) fluidly communicating the first air passage (34) to the second air passage (40), such that compressed air from the air source can be delivered to the tire via the first air passage (34), the annular air passage (48) and the second air passage (40) as the inner ring (18) is rotating.

2. The tire inflation device of claim 1, wherein the first sealing component (44) further comprises a first lip (52) disposed opposed to the first end (50) in the radial direction and a first spring (56) abutting against the first lip (52) such that the first lip (52) that is opposite to the inner ring (18) with respect to the second end (58) abuts against a portion of the second end (58), and the second sealing component (46) comprises a second lip (60) disposed opposite to the second end (58) in the radial direction and a second spring (64) abutting against the second lip (60) such that the second lip (60) that is opposite to the axial end of the outer ring (16) with respect to the first end (50) abuts against a portion of the first end (50).

3. The tire inflation device of claim 2, wherein the first sealing component (44) comprises a first labyrinth structure (54) connecting the first lip (52) to the first end (50), and the second sealing component (46) comprises a second labyrinth structure (62) connecting the second lip (60) to the second end (58), the first labyrinth structure (54) and the second labyrinth structure (62) being engaged but not in contact with each other so as to form a first serpentine gap between the first sealing component (44) and the first sealing component (44) when the compressed air from the air source does not pass through the annular air passage (48), and the first labyrinth structure (54) being elastically deformed to at least partially contact with the second labyrinth structure (62) when the compressed air from the air source that passes through the annular air passage (48) enters the first serpentine gap, thereby applying a force to the first labyrinth structure (54).

4. The tire inflation device of any of claims 1 to 3, wherein the wheel hub bearing (12) comprises a rolling unit disposed in a space between the outer ring (16) and the inner ring (18), and the annular air passage (48) is formed by two sealing assemblies (42), one of which is configured to isolate the annular air passage (48) from the space, and the other of which is configured to isolate the annular air passage (48) from an external environment.

5. The tire inflation device of any of claims 1 to 3, wherein the wheel hub bearing (12) comprises a rolling unit disposed in a space between the outer ring (16) and the inner ring (18), the sealing assembly (42) is configured to isolate the annular air passage (48) from the space, and the tire inflation device further comprises a floating sealing assembly (67) disposed between a first axial end face (16a) of the axial end of the outer ring (16) and a second axial end face (18a) of the inner ring (18) axially opposed to the first axial end face (16a) and configured to isolate the annular air passage (48) from an external environment, and the floating sealing assembly (67) comprises:
a first annular groove (66) formed on the first axial end surface (16a);
a second annular groove (68) formed on the second axial end surface (18a) to be axially opposed to the first annular groove (66);
an annular bracket (70); and
a first sealing ring (72) and a second sealing ring (74) supported by the annular bracket (70), the first sealing ring (72) abutting against a wall of the first axial end face (16a) forming the first annular groove (66), and the second sealing ring (74) abutting against a wall of the second axial end face (18a) forming the second annular groove (68).

6. The tire inflation device of claim 5, comprising an additional sealing assembly (75) comprising:
a labyrinth projection (76) formed on the first axial end surface (16a) radially outwardly relative to the first annular groove (66); and
a third annular groove (78) formed on the second axial end surface (18a), the labyrinth projection (76) projecting axially into the third annular groove (78) to form a second serpentine gap between the first axial end surface (16a) and the second axial end surface (18a).

7. An inflation system (79) for a vehicle comprising a plurality of wheels with wheel hub bearings and tires (82a, 82b, 82c, 82d) and a suspension system with a plurality of air springs (80a, 80b, 80c, 80d), the inflation system (79) comprising:
an air source configured to provide compressed air for inflating each tire and each air spring;
a tire inflation device of any of claims 1 to 6 assigned to a corresponding tire and at least partially integrated with a corresponding wheel hub bearing; and
a control device configured to control the inflation and deflation of each tire and each air spring, wherein the compressed air from the air source is delivered to the corresponding tire via the tire inflation device.

8. The inflation system (79) of claim 7, wherein the air source comprises an air pump (84) and an air storage tank (98), and the inflation system (79) further comprises:
a first valve (90) and a main line (92) in fluid communication with the air pump (84) via the first valve (90);
an exhaust device (94) with a silencer;
a first branch (96) fluidly communicating the exhaust device (94) to the main line (92) via the first valve (90);
a second valve (99) and a second branch (100) fluidly communicating the air storage tank (98) to the main line (92) via the second valve (99); and
multiple third valves (102a, 102b, 102c, 102d) and multiple third branches (104, 106, 108, 110) each fluidly communicating a corresponding air spring or the corresponding tire to the main line (92) via a corresponding third valve.

9. The inflation system (79) of claim 8, wherein at least one of:
the first valve (90) is a two-position four-way solenoid valve with a first port fluidly connected to a first interface of the main line (92), a second port fluidly connected to a second interface of the main line (92), a third port fluidly connected to a first interface of the first branch (96), and a fourth port fluidly connected to a second interface of the first branch (96), the first and second ports of the first valve (90) are opened such that the first port of the first valve (90) is in unidirectional fluid communication with the second port of the first valve (90) and the third and fourth ports of the first valve (90) are closed when the first valve (90) is in a first position, and the first and second ports of the first valve (90) are opened to be in fluid communication with each other and the third and fourth ports of the first valve (90) are opened to be in fluid communication with each other when the first valve (90) is in a second position;
the second valve (99) is a two-position two-way solenoid valve with a first port fluidly connected to a first interface of the second branch (100) and a second port fluidly connected to a second interface of the second branch (100), the first and second ports of the second valve (99) are opened to be in fluid communication with each other when the second valve (99) is in a first position, and the first and second ports of the second valve (99) are closed when the second valve (99) is in a second position; and
each third branch comprises a first section in fluid communication with the main line (92), a second section in fluid communication with the corresponding air spring, and a third section in fluid communication with the corresponding tire, and each third valve is a three-position three-way solenoid valve with a first port fluidly connected to a first interface of the first section, a second port fluidly connected to a second interface of the second section, and a third port fluidly connected to a third interface of the third section, the first and second ports of each third valve are opened to be in fluid communication with each other and the third port of the third valve is closed when each third valve is in a first position, the first, second and third ports of each third valve are closed when each third valve is in a second position, and the first and third ports of each third valve are opened to be fluid communication with each other and the second port is closed when each third valve is in a third position.

10. The inflation system (79) of claim 9, wherein the control device is configured to at least one of:
control the air pump (84) to be activated, the first valve (90) to be located in the first position, the second valve (99) to be located in the first position, and the multiple third valves (102a, 102b, 102c, 102d) to be located in the second position;
control the air pump (84) to be activated, the first valve (90) to be located in the first position, the second valve (99) to be located in the second position, and at least one of the multiple third valves (102a, 102b, 102c, 102d) to be located in the first or third position;
control the air pump (84) to be shut down, the first valve (90) to be located in the first position, the second valve (99) to be located in the first position, and at least one of the multiple third valves (102a, 102b, 102c, 102d) to be located in the first or third position; and
control the air pump (84) to be shut down, the first valve (90) to be located in the second position, the second valve (99) to be located in the second position, and at least one of the multiple third valves (102a, 102b, 102c, 102d) to be located in the first or third position.

11. The inflation system (79) of any of claims 7-10, wherein the control device is configured to determine that the vehicle has a vehicle speed greater than a vehicle speed threshold, the vehicle is not turning, and each of doors, a hood and a main body lid of the vehicle are securely closed before controlling the inflation and deflation of each tire.
